# EUROPEAN PATENT APPLICATION

(11) **EP 2 765 343 A1**
(43) Date of publication of application: **13.08.2014**
(21) Application number: 13154286.2
(22) Date of filing: 06.02.2013
(51) Int. Cl.: F16L 27/053

(54) **Coupling for connection of elements of an air-conditioning system and cooling circuit of an air-conditioning system**

(71) Applicant: TI Automotive Engineering Centre (Heidelberg) GmbH, 69123 Heidelberg (DE)
(72) Inventor: Kempf, Dominik, 60318 Frankfurt am Nain (DE)
(74) Representative: Reiser & Partner

(57) **Abstract**

A coupling (1) for connection of elements of an air-conditioning system comprising a first connecting member (2), wherein the first connecting member (2) has a ball head (3) at one end, a second connecting member (4), where the second connecting member (4) has a ball socket (5) at one end for receiving the ball head (3) of the first connecting member (2), wherein a first fastening flange (6) is placed movably on the first connecting member (2), wherein the first fastening flange (6) has a further ball socket (7) for receiving the ball head (3) and wherein a second fastening flange (8) is formed from the second connecting member (4), which can be connected to the first fastening flange (6) in such a manner that the first connecting member (2) is pivotable relative to the second connecting member (4).

## Description

Coupling for connection of elements of an air-conditioning system and cooling circuit of an air-conditioning system

The invention relates to a coupling for connection of elements of an air-conditioning system to a first connecting member and a second connecting member, which are detachably connectable to one another. The invention further relates to a cooling circuit of an air-conditioning system having a plurality of elements, of which at least two are connected to one another by means of the coupling.

An air-conditioning system comprises a closed circuit in which a coolant circulates. The coolant is compressed by a compressor and then flows into a condenser, where the coolant is liquefied. After leaving the condenser, the coolant is present in the liquid state of aggregation. The liquefied coolant is now supplied to an expansion valve where the pressure of the coolant is reduced. The coolant then flows into an evaporator where it absorbs heat and evaporates, and is thus again present in gaseous form. After leaving the evaporator, the coolant is fed back to the compressor. In order to increase the efficiency of the air-conditioning system, the liquefied coolant can be supplied to an internal heat exchanger where the coolant emerging from the condenser delivers heat to the gaseous coolant leaving the evaporator. The previously described components of the air-conditioning system are connected to one another by means of pipes unless they are immediately adjacent to one another. The pipes can be configured to be flexible or rigid, with rigid pipes being advantageous in regard to costs and pressure stability.

In mobile air-conditioning systems, in particular in air-conditioning systems mounted in a vehicle, the units of the air-conditioning system are on the one hand spatially distributed and on the other hand the installation space available for mounting is restricted. This results in the problem that the pipes connecting the units must be spatially curved and that only small tolerances are permissible so that the pipes can be connected to one another in a stress-free manner and permanently tightly.

It is the object of the invention to provide a coupling for connection of components of an air-conditioning system, which allows a flexible connection of the components.

This object is solved with the features of claims 1 and 7. The subclaims draw reference to advantageous embodiments.

The coupling according to the invention for connection of elements of an air-conditioning system comprises a first connecting member, where the first connecting member has a ball head at one end, a second connecting member, where the second connecting member has a ball socket at one end for receiving the ball head of the first connecting member, where a first fastening flange is placed movably on the first connecting member, where the first fastening flange has a further ball socket for receiving the ball head and where a second fastening flange is formed from the second connecting member, which can be connected to the first fastening flange in such a manner that the first connecting member is pivotable relative to the second connecting member.

The connecting members are configured to receive a pipe or to connect it directly to a component of the air-conditioning system. The fastening of the pipe or the components can be made detachable or non-detachable. However, a material bonded connection of the pipe or the component to the connecting member is particularly advantageous with regard to costs and tightness.

The pipes or components to be connected are each connected to a connecting member. Due to the embodiment of the coupling according to the invention, it is possible to connect the connecting members to one another even when these have an angular offset to one another or are twisted with respect to one another. This enables a stress-free connection so that establishing the connection requires only a small effort. Furthermore, after establishing the connection, the coupling is only exposed to low mechanical stresses having an advantageous effect on the tightness and product life.

The first connecting member can be pivotable relative to the axis of the second connecting member by an angle of up to 20°. Preferably the first connecting member is pivotable relative to the axis of the second connecting member at an angle of up to 10°. This angular range enables sufficient pivotability in order to be able to compensate for tolerances, where a permanent tightness can be ensured at the same time.

A sealing element can be arranged between the ball head of the first connecting member and the ball socket of the second connecting member. The ball head and the ball socket have a large contact area after establishing the connection. These are machined and have small manufacturing tolerances, so that a high tightness can already be ensured by this means alone. The production accuracy is advantageously such that at each part a tolerance of 0.2 mm, preferably 0.1 mm is allowable. In order to further improve the tightness, in particular in order to achieve a permanent tightness, a sealing element made of an elastomeric material can be provided in this section.

Apart from assembly, no relative movement of the connecting members with respect to one another occurs so that the sealing element is preferably configured as an O-ring. For mounting the O-ring, a groove is introduced into the ball socket into which the O-ring is inserted. After completing assembly, the O-ring is compressed with pre-stress between ball head and ball socket which brings about a permanent tightness. Refrigerant-resistant materials such as chloroprene rubber (CR), hydrated nitrile butadiene rubber (HNBR) and ethylene-propylene-diene rubber (EPDM) are considered as material for the O-ring.

The first connecting member, the second connecting member and the first fastening flange can be made of metal. The elements preferably consist of aluminium. Connecting members made of metal can be fabricated particularly simply and with high precision so that the coupling has a good tightness. Furthermore, there are no problems regarding material resistance.

The first fastening flange and the second fastening flange can be connected to one another by means of a connecting element. In a first embodiment, the connecting element can be a screw, where a fastening flange can have a tapped hole for fixing. The connecting element is preferably configured so that the fixing of the fastening flanges is detachable. The screw connection has the advantage that by predefining a tightening torque, a defined pressing of the two connecting members with respect to one another is achieved, which brings about an optimal tightness over a long product life. This applies equally to the sealing element arranged between the connecting members.

The object is further solved by a cooling circuit of an air-conditioning system comprising a first element and a second element which are connected to one another by means of a coupling according to any one of the preceding claims. The cooling circuit of the air-conditioning system comprises a compressor, a condenser, an expansion valve (TXV) and an evaporator. Furthermore, an internal heat exchanger (IHX) can be integrated in the cooling circuit. The components are connected to one another by means of pipes, which are at least partially configured as rigid metal pipes. Ensuing angular tolerances can be compensated in a stress-free manner by the coupling according to the invention.

The section where the coupling is arranged is preferably assigned to the low-pressure section of the cooling circuit. Consequently, the coupling is arranged in flow direction between the expansion valve and the suction side of the compressor. Particularly preferably the coupling connects the sections between evaporator and compressor. In this section, the coolant is gaseous at low pressure in normal mode.

A pressure between 3 and 5 bar can prevail in the interior of the section to which the coupling is assigned. These pressure relationships are obtained in an arrangement between expansion valve and the suction side of the compressor. But the coupling has to be resistant to shock pressure of more than 30 bar, especially during shutdown. Thus, the coupling has to be pressure-resistant up to 40 bar.

The coupling can be arranged between the expansion valve and the evaporator. In this case, a connecting member of the coupling can be connected directly to the expansion valve or the evaporator and form a unit with these. In an advantageous embodiment, one connecting member can also be connected to an internal heat exchanger. In this case, the connecting member can be formed directly from the first or the second flow channel so that the coupling forms a unit with the internal heat exchanger. This is particularly advantageous against the background of the rigid configuration of the internal heat exchanger. An internal heat exchanger has a length of up to 60 cm so that an angular offset can occur. In order to compensate this, it was hitherto necessary to provide a flexible pipe member between the components. As a result of the coupling according to the invention, however, the internal heat exchanger can be connected directly to the compressor or the evaporator by means of the coupling. Ensuing angular deviations or even rotational deviations are compensated in a stress-free manner by the coupling. Due to its specification, the coupling can be arranged in both, the low and the high pressure side of the coolant circuit.

Several embodiments of the coupling according to the invention and the cooling circuit according to the invention will be described in greater detail below based upon the figures. The latter each schematically depict:
Fig. 1 shows a cooling circuit of a mobile air-conditioning system;
Fig. 2 shows an exploded view of the coupling;
Fig. 3 shows the coupling in section;
Fig. 4 shows the coupling with angularly-offset connecting members in section;
Fig. 5 shows a unit consisting of coupling and internal heat exchanger;
Fig. 6 shows a unit consisting of coupling and expansion valve.

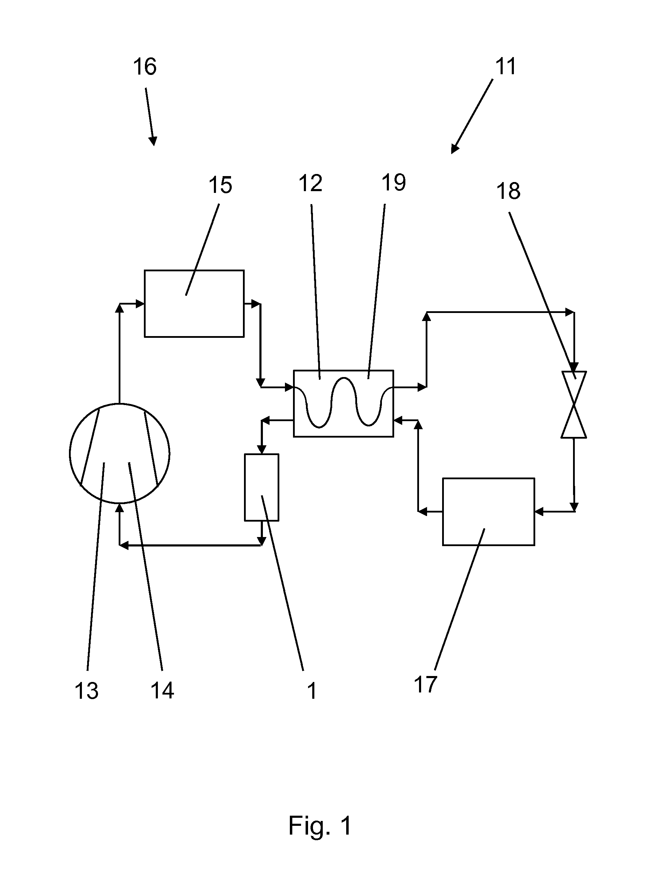

Figure 1 shows schematically the cooling circuit 11 of a mobile air-conditioning system 16, in particular the air-conditioning system of a vehicle. The air-conditioning system comprises a closed circuit in which a coolant circulates. The coolant is compressed by a compressor 14 and then flows into a condenser 15, where the coolant is cooled and liquefied. After leaving the condenser 15, the coolant is liquid and has a temperature of 30°C to 50°C at a pressure of 7 bar to 15 bar. The liquefied coolant is now supplied to an internal heat exchanger 19, where the coolant emerging from the condenser 15 delivers heat to the gaseous coolant emerging from the evaporator 17. The liquid coolant then flows through the expansion valve 18, where the pressure of the coolant is reduced. In the following evaporator 17 the coolant absorbs heat where it heats up, evaporates and is then present in gaseous form. The heated gaseous coolant has a temperature of -1°C to 15°C at a pressure of 3 bar to 5 bar. The gaseous coolant also flows through the internal heat exchanger 19 and absorbs heat from the liquid coolant guided along on the other side.

The coupling 1 according to the invention is arranged between the internal heat exchanger 19 (first element 12) and the compressor 14 (second element 13) and connects these directly to one another. The coupling 1 is therefore arranged on the low-pressure side of the cooling circuit 11. In another advantageous embodiment the coupling 1 forms a unit with the expansion valve 18 and is arranged between expansion valve 18 and evaporator 17. Furthermore, due to its specification, the coupling 1 can be arranged on the high pressure side of the coolant circuit 11.

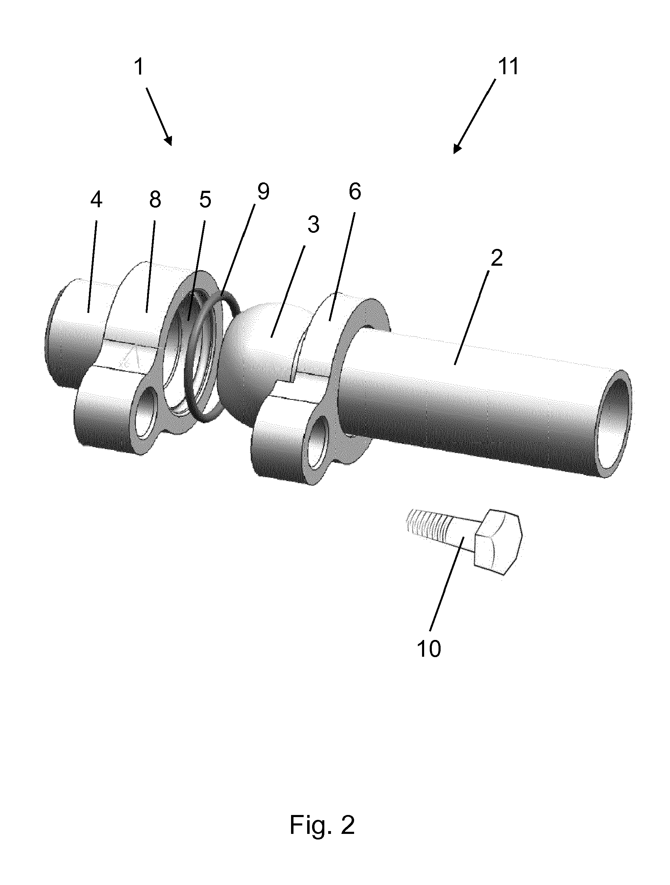

Figure 2 shows the coupling 1 for connecting the elements of the air-conditioning system in an exploded view. The coupling 1 comprises a first connecting member 2 which has a ball head 3 at one end. A second connecting member 4 has a ball socket 5 at one end for receiving the ball head 3 of the first connecting member 2. A first fastening flange 6 is placed movably on the first connecting member 2, where the first connecting flange 6 has a further ball socket 7 for receiving the ball head 3. A second fastening flange 8 is formed from the second connecting member 4, which can be connected to the first fastening flange 6 in such a manner that the first connecting member 2 is pivotable relative to the second connecting member 4. Ball head 3 and ball sockets 5, 7 are thus configured so that the first connecting member 2 is pivotable relative to the axis of the second connecting member 4 at an angle of up to 10°. A pivotability of ± 10° is particularly preferably possible.

In order to improve the tightness, a sealing element 9, configured as an O-ring, is formed between the ball head 3 of the first connecting member 2 and the ball socket 5 of the second connecting member 4. The sealing element 9 is arranged in a groove which is inserted in the ball head 5 of the second connecting member 4.

The first fastening flange 6 and the second fastening flange 8 are connected to one another by means of a connecting element 10. In this embodiment a screw is provided as connecting element 10 which is fixed by means of a predefined tightening torque. The screw can be fixed by means of a separate nut or a thread inserted in a fastening flange 6, 8.

The first connecting member 2, the second connecting member 4 and the first fastening flange consist of metal material, in this embodiment, of aluminium.

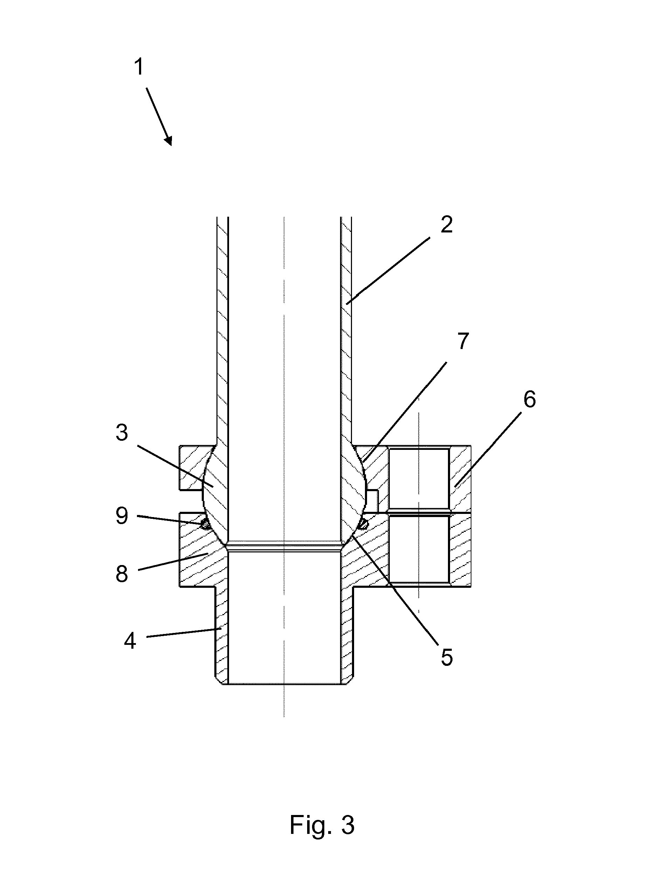

Figure 3 shows the coupling 1 described in Figure 2 in section.

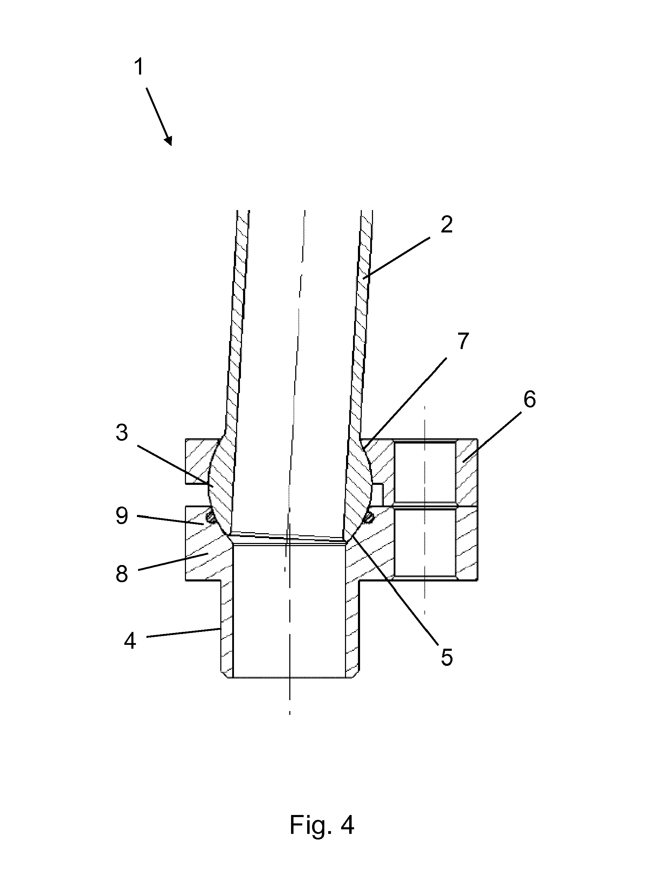

Figure 4 shows the coupling 1 described in Figure 2 in section, where the connecting members 2, 4 are aligned at an angle to one another. It is shown that the coupling 1 according to the invention enables an angular compensation of 7° with respect to the axes of the connecting members 2, 4.

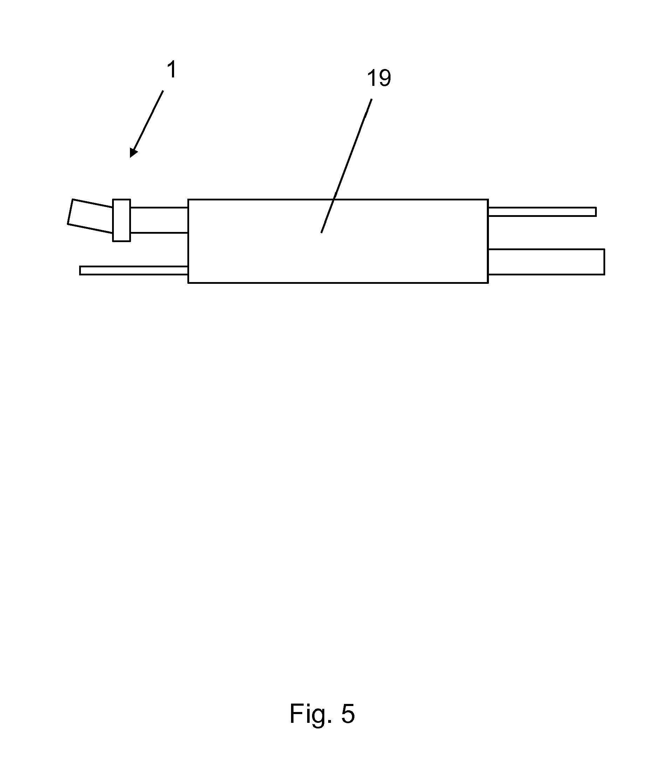

Figure 5 shows a structural unit consisting of a coupling 1 according to Figure 2 and an internal heat exchanger 19. The coupling 1 is connected directly from an outlet of the internal heat exchanger 19 so that the outlet of the internal heat exchanger 19 at the same time forms the first connecting member 2 of the coupling 1. In this embodiment the second connecting member 4 is connected to the suction connection of the compressor 14.

In another embodiment the second connecting member 4 is integrally formed with the suction connection of the compressor 14. In this embodiment the internal heat exchanger 19 forms a unit with the first connecting member 2 of the coupling 1 and the compressor 14 forms a unit with the second connecting member 4 of the coupling 1. Here it is particularly advantageous that no pipe is required to connect internal heat exchanger 19 and compressor 14 and that a stress-free connection of these components is possible due to the pivotability and rotatability of the coupling 1.

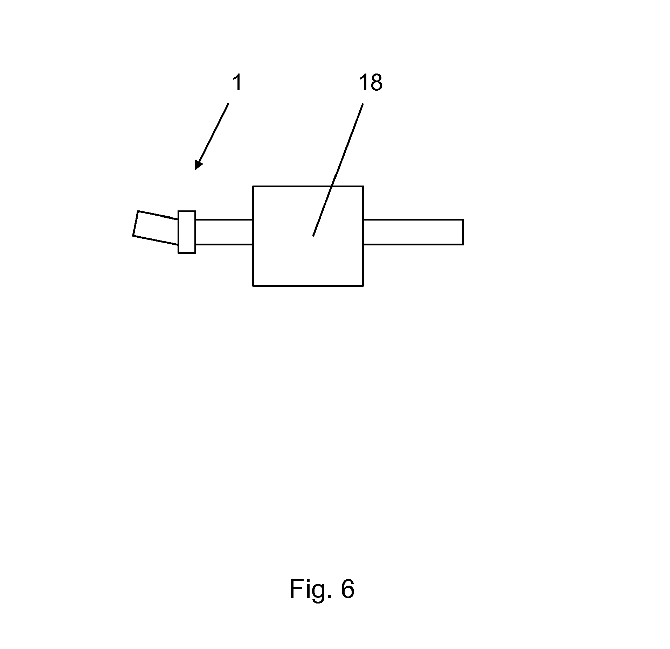

Figure 6 shows a structural unit consisting of a coupling 1 according to Figure 2 and an expansion valve 18. The coupling 1 is connected directly to the low-pressure side of the expansion valve 18 so that the connecting member on the low-pressure side simultaneously forms the first connecting member 2 of the coupling 1. In this embodiment, the second connecting member 4 is connected to the inlet of the evaporator 17.

In a further embodiment the second connecting member 4 is integrally formed with the inlet of the evaporator 17. In this embodiment the expansion valve 18 forms a unit with the first connecting member 2 of the coupling 1 and the evaporator 17 forms a unit with the second connecting member 4 of the coupling 1. Here it is particularly advantageous that no pipe is required to connect expansion valve 18 and evaporator 17 and that a stress-free connection of these components is possible due to the pivotability and rotatability of the coupling 1.

In other embodiments the coupling 1 can also be arranged between evaporator 17 and internal heat exchanger 19. Furthermore, the coupling 1 can be arranged on both, the low and high pressure side of the circuit.

## Claims

1. Coupling (1) for connection of elements of an air-conditioning system comprising a first connecting member (2), wherein the first connecting member (2) has a ball head (3) at one end, a second connecting member (4), wherein the second connecting member (4) has a ball socket (5) at one end for receiving the ball head (3) of the first connecting member (2), wherein a first fastening flange (6) is placed movably on the first connecting member (2), wherein the first fastening flange (6) has a further ball socket (7) for receiving the ball head (3) and wherein a second fastening flange (8) is formed from the second connecting member (4), which can be connected to the first fastening flange (6) in such a manner that the first connecting member (2) is pivotable relative to the second connecting member (4).

2. The coupling according to claim 1, **characterized in that** the first connecting member (2) is pivotable relative to the axis of the second connecting member (4) at an angle of up to 20°.

3. The coupling according to claims 1 or 2, **characterized in that** a sealing element (9) is arranged between the ball head (3) of the first connecting member (2) and the ball socket (5) of the second connecting member (4).

4. The coupling according to claim 3, **characterized in that** the sealing element (9) is configured as an O-ring.

5. The coupling according to one of claims 1 to 4, **characterized in that** the first connecting member (2), the second connecting member (4) and the first fastening flange (6) are made of metal.

6. The coupling according to one of claims 1 to 5, **characterized in that** the first fastening flange (6) and the second fastening flange (8) are connected to one another by means of a connecting element (10).

7. Cooling circuit (11) of an air-conditioning system comprising a first element (12) and a second element (13) which are connected to one another by means of a coupling (1) according to any one of the preceding claims.

8. The cooling circuit according to claim 7 or 8, **characterized in that** the coupling (1) is pressure-resistant up to 40 bar.

9. The cooling circuit according to one of claims 7 to 9, **characterized in that** the coupling (1) is arranged between the expansion valve and the evaporator.

10. The cooling circuit according to one of claims 7 to 10, **characterized in that** a connecting member (2) is connected to an internal heat exchanger.
